# EUROPÄISCHE PATENTSCHRIFT

(11) **EP 1 513 666 B1**
(45) Veröffentlichungstag und Bekanntmachung des Hinweises auf die Patenterteilung: **20.09.2006**
(21) Anmeldenummer: 03729758.7
(22) Anmeldetag: 12.06.2003
(51) Int. Cl.: B29C 53/36, B31D 1/02

(54) **VERFAHREN UND ANLAGE ZUM FALTEN EINES TEXTILEN BANDABSCHNITTES, INSBESONDERE EINES ETIKETTENBANDABSCHNITTES**
METHOD AND SYSTEM FOR FOLDING A TEXTILE STRIP SECTION, ESPECIALLY A SECTION OF STRIP LABELS
PROCEDE ET INSTALLATION POUR PLIER UNE SECTION DE BANDE TEXTILE, EN PARTICULIER UNE SECTION DE BANDE FORMANT UNE ETIQUETTE

(30) Priorität: 13.06.2002 CH 100502
(43) Veröffentlichungstag der Anmeldung: 16.03.2005
(73) Patentinhaber: TEXTILMA AG, 6362 Stansstad (CH)
(72) Erfinder: ENGESSER, Bernhard, CH-9200 Gossau (CH)
(74) Vertreter: Schmauder, Klaus Dieter
(86) Internationale Anmeldenummer: PCT/CH2003/000373
(87) Internationale Veröffentlichungsnummer: WO 2003/106144

(56) Entgegenhaltungen:
- WO-A-01/66343
- US-A- 2 964 312
- US-A- 3 148 874

## Beschreibung

### Technisches Gebiet

Die Erfindung betrifft ein Verfahren zum Falten eines textilen Bandabschnittes, insbesondere eines Etikettenbandabschnittes gemäss Oberbegriff des Anspruches 1 sowie eine Anlage zur Durchführung des Verfahrens gemäss Anspruch 3.

### Stand der Technik

Verfahren und Anlagen der eingangs genannten Art sind mehrfach bekannt, so beispielsweise aus der US 3148874 und so weiter. Bei den Verfahren und Anlagen findet ein Fixieren des gefalteten Bandabschnittes in der Regel erst nach dem Falten und im gefalteten Zustand statt. Dies hat den Nachteil, dass das Fixieren relativ viel Zeit beansprucht und überdies die Gefahr besteht, dass der Bandabschnitt auf der Sichtseite Glanzstellen erhält, die durch das Pressen und Erwärmen des gefalteten Bandes entstehen, insbesondere wenn eine zu starke Erwärmung stattgefunden hat. Zur Verbesserung ist in der US 3148874 vorgesehen, den Faltbereich vor dem Falten auf der Vorderseite zu Erwärmen. Abgesehen davon, dass das Erwärmen der Vorderseite des Bandabschnittes zu Glanzstellen auf dem Bandabschnitt führt, reicht das Erwärmen insbesondere bei dickeren Bändern nicht aus, um eine einwandfreie Faltung zu gewährleisten.

### Darstellung der Erfindung

Aufgabe der Erfindung ist es, ein Verfahren und eine Anlage zum Falten eines textilen Bandabschnittes, insbesondere eines Etikettenbandabschnittes der eingangs genannten Art zu verbessern.

Diese Aufgabe wird erfindungsgemäss gelöst durch
a. ein Verfahren gemäss Anspruch 1
b. eine Anlage gemäss Anspruch 3.

Dadurch, dass der zu faltende Bandabschnitt vor dem Falten auf der Rückseite des zu faltenden Bereich erwärmt wird, gelangt der zu faltende Bandabschnitt bereits vorgewärmt in die Faltvorrichtung, wodurch sich wesentliche Vorteile ergeben. Der vorgewärmte Bandabschnitt benötigt in der Faltstation zum Fixieren eine weniger lange Erwärmung, die überdies nicht mit einer Grenztemperatur stattfinden muss. Dadurch wird nicht nur die Durchgangszeit an der Falt- und Fixierstation verringert, sondern auch die Qualität des gefalteten Bandabschnittes verbessert, da selbst bei höherer Temperatur und etwaiger Glanzbildung und/oder Verfärbung auf der Rückseite eine Beeinträchtigung des Bandabschnittes an der Sichtseite nicht gegeben ist. So kann auch bei dickeren Bändern eine einwandfreie Faltung und Fixierung der gefalteten Bandabschnitte erfolgen. Die Sichtseite des Bandabschnittes erfährt so eine schonende, die Qualität verbessernde Behandlung. Je stärker man die Vorerwärmung durchführt, desto geringer ist die beim nachfolgenden Fixieren erforderliche Wärmezuführung. Schliesslich wird auch die Faltvorrichtung weniger stark beansprucht und unterliegt damit geringerem Verschleiss, was zu einer grösseren Lebensdauer führt.

Vorteilhafte Ausgestaltungen des Verfahrens sind im Anspruch 2 und der Anlage in den Ansprüchen 4 bis 7 enthalten.

Gemäss Anspruch 2 kann man die Vorerwärmung bis annähernd zum Erweichungspunkt des Bandmaterials durchführen.

Die Anlage zur Durchführung des Verfahrens weist zweckmässigerweise eine der Faltvorrichtung vorgelagerte Heizvorrichtung zum Aufheizen des Faltbereiches des Bandabschnittes auf dessen Rückseite auf. Dabei kann die Heizvorrichtung mit einem gewissen Abstand von der Faltstation angeordnet sein. Vorteilhaft ist eine Ausbildung der Anlage nach Anspruch 4, wonach der Faltvorrichtung pro Faltbereich ein Auflageglied für den Bandabschnitt zugeordnet ist. Gemäss Anspruch 5 kann dem Auflageglied ein gegen dieses zustellbares Halteglied zugeordnet sein, um den Bandabschnitt am Auflageglied zu halten. Nach Anspruch 6 kann mit Vorteil zusätzlich das Halteglied mit einer elektrischen Heizvorrichtung ausgestattet sein. Die Anlage kann eine spezielle Zuführvorrichtung für den Bandabschnitt zur Faltvorrichtung aufweisen, die gemäss Anspruch 7 mit einer Heizvorrichtung zum Erwärmen des Faltbereiches des Bandabschnittes ausgerüstet ist.

### Kurze Beschreibung der Zeichnungen

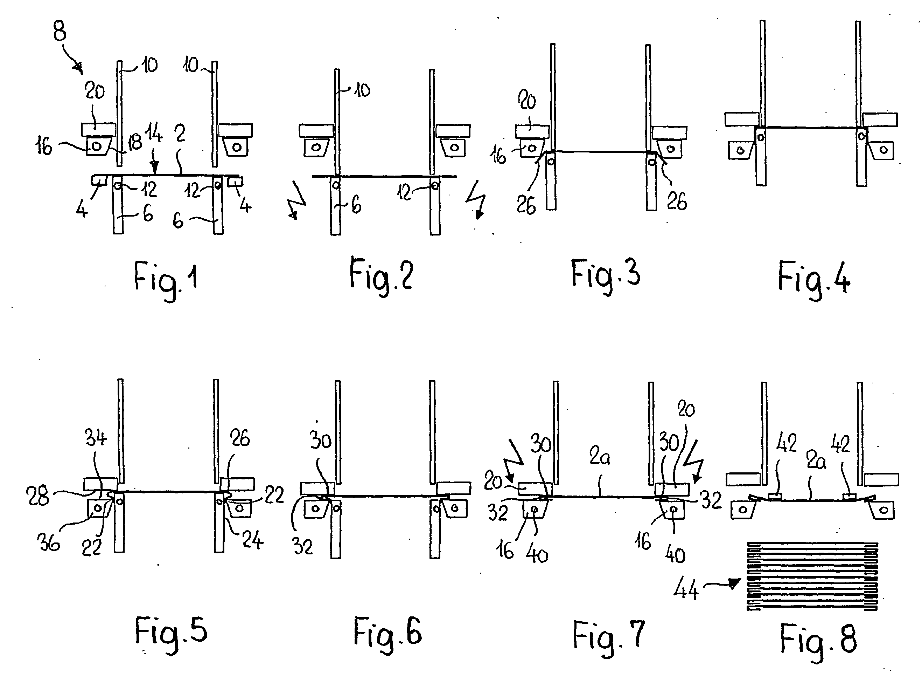

Ausführungsbeispiele der Erfindung werden nachfolgend anhand schematischer Zeichnungen näher beschrieben, dabei zeigen die Figuren 1 bis 8 eine Anlage zum Falten eines Bandabschnittes in schematischer Darstellung und in verschiedenen Phasen des Faltens des Bandabschnittes. Eine solche Anlage ist Gegenstand der WO01/66343 und dort im Detail erläutert. Nachfolgend werden nur die für die vorliegende Erfindung relevanten Teile beschrieben.

### Wege zur Ausführung der Erfindung

Die Figuren 1 bis 8 zeigen einen Bandabschnitt 2, der über paarweise angeordneten Schienen 4 Auflagegliedern 6 vor einer Faltvorrichtung 8 zugeführt worden ist. Den Auflagegliedern 6 sind Halteglieder 10 zugeordnet, die gegen die Auflageglieder 6 pressbar sind, um den Bandabschnitt 2 an den Auflagegliedern festzuhalten. Die an beiden Enden des Bandabschnittes 2 im Faltbereich angeordneten Auflageglieder 6 sind mit einer Heizvorrichtung 12 ausgerüstet, um die Bandabschnitte im Faltbereich auf der der Sichtseite 14 abgewandten Seite zu erwärmen. Zusätzlich können die Schiene 4 und/oder das Halteglied 10 in nicht näher dargestellter Weise mit einer Heizvorrichtung ausgestattet sein. Die Faltvorrichtung weist Faltglieder 16 auf, die mit einer Aufläuffläche 18 versehen sind und Klemmglieder 20 enthalten.

Die Faltenbildung geschieht wie folgt.

Zunächst wird der Bandabschnitt 2 über die Schiene 4 den Auflagegliedern 6 zugeführt, wo sie mittels der Halteglieder 10 an zwei Endabschnitten gehalten werden, die den Faltbereichen des Bandabschnittes entsprechen. Hier erfolgt zunächst eine Aufheizung der Faltbereiche der Bandabschnitte, die bis nahe an den Schmelzbereich des Bandmaterials des Bandabschnittes erfolgen kann. So kann die Aufheizung 100 bis 200°C betragen, wobei 150°C bevorzugt sind.

Das Faltglied 16 weist eine Stauchkante 22 auf, die wie aus den Figuren hervorgeht, mit einem Ende des gegen eine Stützfläche 24 umgelegten Bandteiles 26 zusammenwirkt. Die Stützfläche 24 ist mittels einer nicht näher dargestellten Vorspannfeder gegen das Faltglied 16 vorgespannt, um den Eingriff der Stauchkante 22 am Bandteil 26 zu verstärken. Das Auflageglied 6 wird nun, wie aus Figur 4 hervorgeht, in die Ausgangsstellung zurückgezogen, wobei die Stauchkante 22 des Faltgliedes 16 den überstehenden Bandteil 26 gegen eine Klemmfläche 28 des Klemmgliedes 20 staucht und dabei eine definitive Falte 30 mit der Faltkante 32 bildet, die in der Ebene des Bandabschnittes 2 liegt, wie aus den Figuren 5 und 6 hervorgeht. Dabei wird die Falte 30 zwischen die Klemmfläche 28 des Klemmgliedes 20 und die Klemmfläche 34 des gleichzeitig auch als Klemmglied 36 ausgebildeten Faltgliedes 16 eingeklemmt, die praktisch in der Ebene des Bandabschnittes 2 ausgerichtet sind. Das Klemmglied 36 enthält ein Heizelement 40, um die zwischen den Klemmflächen 28 und 34 eingespannte Falte 30 zu glätten und in der gelegten Form zu fixieren, wie aus Figur 7 hervorgeht. Das Klemmen und Fixieren erfolgt während der Förderbewegung der nicht näher dargestellten karussellartigen Fördervorrichtung von einer Faltstation zu einer Endladestation gemäss Figur 8. Dort wird der fertig gefaltete Bandabschnitt 2a mittels eines Heberarmes oder einer Entnahmegabel 42 bei geöffneten Klemmgliedern 20,36 in ein Magazin 44 einer Stapelvorrichtung überführt.

Durch die Beheizung des Bandabschnittes vor dem Falten ergeben sich eine Reihe von Vorteilen. So ist an den Klemmgliedern 20,36 eine wesentlich geringere Aufheizung erforderlich. Dies schont nicht nur die Klemmglieder, sondern verringert auch die Taktzeiten und liefert überdies noch verbesserte gefaltete Etiketten, wie bereits oben ausgeführt worden ist.

Die thermische Vorbehandlung der Faltbereiche der zu faltenden Bandabschnitte ist nicht nur für eine Faltvorrichtung gemäss der WO 01/66343 geeignet, wie sie im Ausführungsbeispiel beschrieben ist, sondern auch für andere Faltvorrichtungen.

### Bezugszeichenliste

- 2: Bandabschnitt
- 2a: Bandabschnitt gefaltet
- 4: Schiene
- 6: Auflageglied
- 8: Faltvorrichtung
- 10: Halteglied
- 12: Heizvorrichtung
- 14: Sichtseite
- 16: Faltglied
- 18: Auflagefläche
- 20: Klemmglied
- 22: Stauchkante
- 24: Stützfläche
- 26: Bandteil
- 28: Klemmfläche von 20
- 30: definitive Falte
- 32: Faltkante
- 34: Klemmfläche von 36
- 36: Klemmglied
- 40: Heizelement
- 42: Heberarm oder Entnahmegabel
- 44: Magazin

## Patentansprüche

1. Verfahren zum Falten eines textilen Bandabschnittes, insbesondere eines Etikettenbandabschnittes, wobei der Bandabschnitt (2) zunächst einem Auflageglied (6) zugeführt, im zu faltenden Bereich erwärmt, dann gefaltet und schliesslich im gefalteten Zustand unter Pressen und Erwärmen fixiert wird, **dadurch gekennzeichnet, dass** man den Faltbereich auf der Rückseite erwärmt.

2. Verfahren nach Anspruch 1, **dadurch gekennzeichnet, dass** man den Faltbereich bis annähernd zum Erweichungspunkt des Bandmaterials erwärmt.

3. Anlage zur Durchführung des Verfahrens nach Anspruch 1 oder 2, mit einer einer Faltvorrichtung (8) vorgelagerten Heizvorrichtung (12) zum Aufheizen des Faltbereiches des Bandabschnittes (2), **dadurch gekennzeichnet, dass** die Heizvorrichtung (12) auf der Rückseite des Bandabschnittes wirksam ist.

4. Anlage nach Anspruch 3, **dadurch gekennzeichnet, dass** an der Faltvorrichtung (8) pro Faltbereich ein Auflageglied (6) für den Bandabschnitt (2) angeordnet ist.

5. Anlage nach Anspruch 4, **dadurch gekennzeichnet, dass** dem Auflageglied (6) ein gegen dieses zustellbares Halteglied (10) zugeordnet ist.

6. Anlage nach Anspruch 4 und/oder 5, **dadurch gekennzeichnet, dass** zusätzlich das Halteglied (10) eine elektrische Heizvorrichtung (12) enthält.

7. Anlage nach Anspruch 3, **dadurch gekennzeichnet, dass** sie eine Zuführvorrichtung (4) für den Bandabschnitt (2) zur Faltvorrichtung (8) aufweist, die eine Heizvorrichtung zum Erwärmen des Faltbereiches des Bandabschnittes (2) aufweist.

## Claims

1. A method for folding a textile strip section, especially a section of strip labels, the strip section (2) firstly being fed to a supporting element (6), heated in the region to be folded, then folded and finally fixed in the folded state by being pressed and heated, **characterized in that** the folding region is heated on the rear side.

2. The method as claimed in claim 1, **characterized in that** the folding region is heated approximately as far as the softening point of the strip material.

3. A system for implementing the method as claimed in claim 1 or 2, having a heating device (12) placed upstream of a folding device (8) in order to heat up the folding region of the strip section (2), **characterized in that** the heating device (12) acts on the rear side of the strip section.

4. The system as claimed in claim 3, **characterized in that** a supporting element (6) for the strip section (2) is arranged on the folding device (8) per folding region.

5. The system as claimed in claim 4, **characterized in that** the supporting element (6) is assigned a holding element (10) which can be fed against the latter.

6. The system as claimed in claim 4 and/or 5, **characterized in that** the holding element (10) additionally contains an electric heating device (12).

7. The system as claimed in claim 3, **characterized in that** it has a feed device (4) for the strip section (2) to the folding device (8), which has a heating device for heating the folding region of the strip section (2).

## Revendications

1. Procédé pour plier une section de bande textile, notamment une section de bande d'étiquettes, dans lequel la section de bande (2) est d'abord acheminée à un organe d'appui (6), chauffée dans la région à plier, puis pliée et finalement fixée dans l'état plié par pressage et chauffage, **caractérisé en ce que** l'on chauffe la région de pliage du côté arrière.

2. Procédé selon la revendication 1, **caractérisé en ce que** l'on chauffe la région de pliage jusqu'à environ le point de ramollissement du matériau en bande.

3. Installation pour la mise en oeuvre du procédé selon la revendication 1 ou 2, comprenant un dispositif de chauffage (12) monté avant un dispositif de pliage (8), pour le chauffage de la région de pliage de la section de bande (2), **caractérisée en ce que** le dispositif de chauffage (12) agit du côté arrière de la section de bande.

4. Installation selon la revendication 3, **caractérisée en ce qu'**un organe d'appui (6) pour la section de bande (2) est disposé pour chaque région de pliage sur le dispositif de pliage (8).

5. Installation selon la revendication 4, **caractérisée en ce que** l'on associe à l'organe d'appui (6) un organe de retenue (10) pouvant être approché contre celui-ci.

6. Installation selon la revendication 4 et/ou 5, **caractérisée en ce que** l'organe de retenue (10) contient en outre un dispositif de chauffage électrique (12).

7. Installation selon la revendication 3, **caractérisée en ce qu'**elle présente un dispositif d'apport (4) pour amener la section de bande (2) au dispositif de pliage (8), qui présente un dispositif de chauffage pour chauffer la région de pliage de la section de bande (2).
